# EUROPÄISCHE PATENTSCHRIFT

(11) **EP 0 579 937 B1**
(45) Veröffentlichungstag und Bekanntmachung des Hinweises auf die Patenterteilung: **28.08.1996**
(21) Anmeldenummer: 93108744.9
(22) Anmeldetag: 01.06.1993
(51) Int. Cl.: B29C 51/44, B29C 51/26, B29C 69/00

(54) **Vakuumformmaschine zum gleichzeitigen Verformen und Verschweissen zweier Kunststoffplatten**
Vacuum forming machine for simultaneously forming and welding two plastic sheets
Machine de formage par le vide, pour former et souder, en mîme temps, deux feuilles en plastique

(30) Priorität: 18.07.1992 DE 4223785
(43) Veröffentlichungstag der Anmeldung: 26.01.1994
(73) Patentinhaber: Georg Geiss Maschinenfabrik, 96145 Sesslach (DE)
(72) Erfinder: Geiss, Manfred, Dipl.-Ing., W-8601 Sesslach (DE)
(74) Vertreter: Weise, Reinhard, Dipl.-Ing.

(56) Entgegenhaltungen:
- EP-A- 0 450 482
- DE-A- 4 035 224
- US-A- 1 482 707
- US-A- 3 398 434

## Beschreibung

Die Erfindung bezieht sich auf eine Vakuumformmaschine zum gleichzeitigen Verformen und Verschweißen zweier Kunststoffplatten bzw. -folien mit einem zwischen dem oberen und unteren Spannrahmen angeordneten, die beiden Kunststoffplatten während der Beheizung und Plastifizierung in Abstand zueinander haltenden Dinstanzrahmen.

Bei der sogenannten Vakuumverformung - auch als Vakuumtiefziehen bezeichnet - wird eine durch Wärme plastifizierte Thermoplastplatte mit Hilfe des Luftdrucks gegen eine Form gepreßt, dann mittels Gebläse gekühlt und entformt. Mit diesem Verfahren werden vom Trinkbecher bis zum Kunststoffboot die verschiedensten Formteile hergestellt. Eine Erweiterung dieses Verfahrens stellt das sogenannte "Twinsheetverfahren" in der Kunststoffverarbeitung dar, das z.B. in US-A-4 801 347 beschrieben ist. Bei diesem erweiterten Verfahren werden gleichzeitig zwei Kunststoffplatten beheizt und verformt und im gleichen Arbeitsgang entlang einer Paßfläche zusammengepreßt und so verschweißt. Dieses Verschweißen erfolgt mit der den Kunststoffplatten innewohnenden Wärme. Der Vorteil dieses Verfahrens besteht somit darin, daß der sonst notwendige Arbeitsgang des Fügens - sei es Kleben oder Schweißen - entfällt. Da keine chemischen Prozesse oder sonstige chemische Stoffe benötigt werden, vereinfacht sich nicht nur der Herstellvorgang, sondern auch das allfällige Recycling. Bei diesem "Twinsheetverformen" wird ein sogenannter Distanzrahmen benötigt, der zwischen dem oberen und unteren Spannrahmen angeordnet und in sich dicht ist. Dieser Distanzrahmen hält die beiden Kunststoffplatten während der Beheizung auf Abstand, wobei das Zusammenkleben der beiden Platten während der Beheizung durch Einblasen von Luft in den Distanzrahmen verhindert wird. Um das fertige Formteil nach der Verformung und Verschweißung der beiden Kunststoffplatten entformen zu können, muß der obere Spannrahmen hochfahren und eine der vier Rahmenteile bzw. -leisten des Distanzrahmens gelöst und herausgenommen werden. Danach läßt sich das fertige Formteil wie eine Schublade herausziehen. Dieses Verfahren ist umständlich und nicht rationell und universell einsetzbar, da es einer Automatisierung entgegensteht.

Die Aufgabe der Erfindung besteht darin, die Vakuumformmaschine der im Oberbegriff des Anspruches 1 angegebenen Art insoweit zu verbessern, daß ein vollautomatischer Verfahrensablauf sichergestellt ist. Dabei soll nicht nur ein leichtes und automatisiertes Auswerfen des Fertigteils möglich sein, sondern auch ein einfaches Einbringen der beiden zu verformenden Kunststoffplatten in die Vakuumformmaschine. Insgesamt soll mit der Vakuumformmaschine ein beschleunigter Verfahrensablauf und folglich eine entsprechende Steigerung der Produktion bei höchster Fertigungsqualität der erzeugten Fertigteile ermöglicht werden.

Zur Lösung dieser Aufgabe sind bei der Erfindung die im kennzeichnenden Teil des Anspruches 1 angegebenen Merkmale vorgesehen. In den dem Anspruch 1 folgenden Ansprüchen sind für die Aufgabenlösung vorteilhafte und förderliche Weiterbildungen beansprucht.

Bei der Erfindung sind also sowohl der obere und untere Spannrahmen als auch der dazwischen angeordnete Distanzrahmen jeweils in einem Trägerrahmen gehalten. Dabei ist der Trägerrahmen des oberen Spannrahmens mit dem Trägerrahmen des Distanzrahmens lose verbunden, und zwar in der Weise, daß der obere Spannrahmen nach dem Hochfahren zunächst vom Distanzrahmen abhebt und nach dem Durchlaufen eines bestimmten Hubs diesen mitnimmt. Der Distanzrahmen wird also erst dann angehoben, wenn sich der obere Spannrahmen um einen bestimmten Betrag nach oben verlagert hat. Außerdem sind die vier Rahmenteile des Distanzrahmens innerhalb des zugehörigen Trägerrahmens verschieb- bzw. verlagerbar gehalten, so daß ihr Abstand voneinander und somit der lichte Querschnitt des Distanzrahmens veränderbar ist. Hierbei kann der lichte Querschnitt des Distanzrahmens so weit vergrößtert werden, daß das Fertigteil ausgeworfen werden kann. Um eine entsprechende Veränderung des lichten Querschnitts des Distanzrahmens herbeiführen zu können, sind an den Querrahmenteilen (oder aber den Längsrahmenteilen) des Distanzrahmens im Bereich dessen Ecken schräg verlaufende Führungsbolzen befestigt, die gleitend in entsprechende Bohrungen des benachbarten Längsrahmenteils (bzw. des benachbarten Querrahmenteils) eingreifen, wobei die Längsrahmenteile bzw. Querrahmenteile verschiebbar innerhalb des Trägerrahmens geführt sind. Zwischen den Längsrahmenteilen (bzw. Querrahmenteilen) ist auf beiden Seiten des Distanzrahmens jeweils ein Bewegungsmechanismus angeordnet, der die Längsrahmenteile (bzw. Querrahmenteile) zueinander verschiebt, und zwar von der geschlossenen Position des Distanzrahmens bis zu einer vollständigen Öffnung des Distanzrahmens, bei der das Fertigteil freigegeben wird, und umgekehrt. Die lose Verbindung zwischen dem Trägerrahmen des oberen Spannrahmens und dem Trägerrahmen des Distanzrahmens erfolgt über am Trägerrahmen des Spannrahmens befestigte Bolzen, die gleitend in Bohrungen des Trägerrahmens des Distanzrahmens eingreifen und an ihren freien Enden Anschläge tragen, die nach einem bestimmten Hub des Spannrahmens zur Anlage am Trägerrahmen des Distanzrahmens kommen. Zur Einstellung des gewünschten Hubs des Spannrahmens sind die Anschläge verstellbar. Dabei sind die Anschläge zweckmäßigerweise als Gewindemuttern ausgebildet, die auf einem Gewinde des jeweiligen Bolzens sitzen und durch Verdrehen entsprechend verstellt werden können. Schließlich ist der Vakuumformmaschine eine Beschickungsvorrichtung zugeordnet, die als in ein und derselben Ebene ein- und ausfahrbarer Wagen ausgebildet ist, an dessen Unterseite Saugnäpfe zum Festhalten der einzubringenden Kunststoffplatten vorgesehen sind, während die Oberseite des Wagens zum Ausbringen des aus dem Distanzrahmen ausgeworfenen Fertigteils dient.

Die Erfindung wird nun anhand von Ausführungsbeispielen im Zusammenhang mit der Zeichnung näher erläutert. Es zeigen:
- Fig. 1: eine seitliche schematische Ansicht des oberen und unteren Spannrahmens mit dazwischenliegendem Distanzrahmen und den zugehörigen Trägerrahmen im geschlossenen Zustand,
- Fig. 2: die einzelnen Rahmen mit innerhalb des Distanzrahmens gehaltenem Fertigteil bei angehobenem oberen Spannrahmen,
- Fig. 3: die einzelnen Rahmen bei weiter hochgefahrenem oberem Spannrahmen und mitgenommenen Distanzrahmen,
- Fig. 4: eine Draufsicht auf den Distanzrahmen und zugehörigen Trägerrahmen in schematischer Darstellung,
- Fig. 5: eine der Eckverbindungen des Distanzrahmens in vergrößerter Darstellung gemäß Einzelheit V in Fig. 4,
- Fig. 6 bis 8: seitliche Ansichten der Spann- und des Distanzrahmens mit seitlich einfahrbarer Beschickungsvorrichtung in verschiedenen Phasen der Beschickung mit den zu verformenden Kunststoffplatten und Entnehmen des Fertigteils, jeweils in schematischer Darstellung.

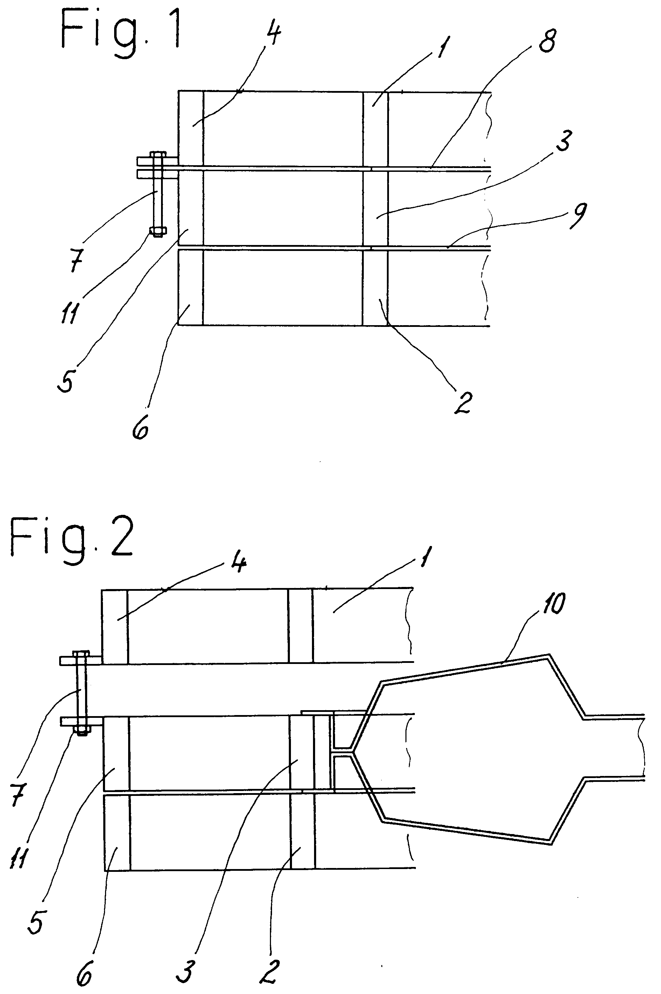

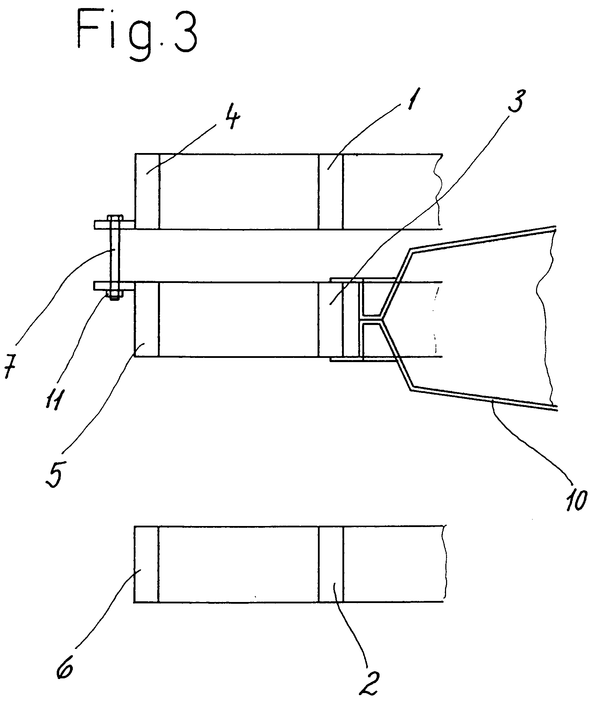

Die Fig. 1 bis 3 zeigen in seitlicher Ansicht einen oberen Spannrahmen 1 und einen unteren Spannrahmen 2 sowie den zwischen diesen beiden Spannrahmen 1 und 2 angeordneten Distanzrahmen 3. Die beiden Spannrahmen 1 und 2 sowie der Distanzrahmen 3 sind jeweils in Trägerrahmen 4, 5 und 6 gehalten und befestigt, die die zugehörigen Spannrahmen 1, 2 und den Distanzrahmen 3 umgreifen. Der Trägerrahmen 4 des oberen Spannrahmens 1 steht mit dem Trägerrahmen 5 des Distanzrahmens 3 in loser Verbindung, die über Bolzen 7 erfolgt, die am Trägerrahmen 4 befestigt sind und gleitend in Bohrungen des Trägerrahmens 5 eingreifen. Fig. 1 zeigt das Spannsystem im geschlossenen Zustand, wobei die beiden im sog. Twinsheetverfahren zu verformenden Kunststoffplatten 8 und 9 eingespannt gehalten sind. Die Platte 8 liegt zwischen dem oberen Spannrahmen 1 und dem Distanzrahmen 3 und die Platte 9 liegt zwischen dem Distanzrahmen 3 und dem unteren Spannrahmen 2. Der Distanzrahmen 3 ist dicht und bildet einen von den Kunststoffplatten 8 und 9 abgeschlossenen Raum, in den während des Beheizens und Plastifizierens der Platten 8 und 9 Stützluft eingeblasen wird, um ein Verkleben der beiden Platten 8, 9 zu verhindern. Die Verformung der Platten 8, 9 erfolgt durch Anlegen eines Vakuums an der nicht weiter gezeigten Unter- und Oberform, so daß das in Fig. 2 und 3 angedeutete Fertigteil 10 entsteht. Beim Hochfahren des oberen Spannrahmens 1 entfernt sich dieser zunächst um einen bestimmten Hub von dem Distanzrahmen 3. An den Bolzen 7 sind Anschläge 11 vorgesehen, die als auf den Bolzen 7 aufschraubbare Gewindemuttern ausgebildet sind. Sobald die Anschläge 11 zur Anlage an den Trägerrahmen 5 kommen, wird dieser und damit auch der mit ihm in Verbindung stehende Distanzrahmen 3 nach oben mitgenommen, wie Fig. 3 zeigt. Der Distanzrahmen 3 nimmt auch das in ihm gehaltene Fertigteil 10 mit. Der freie Hub des oberen Spannrahmens 1, d.h. sein vertikaler Abstand zum Distanzrahmen 3 nach dem Hochfahren des oberen Spannrahmens 1, läßt sich einstellen, z.B. durch entsprechenden Verdrehen der Gewindemuttern 11.

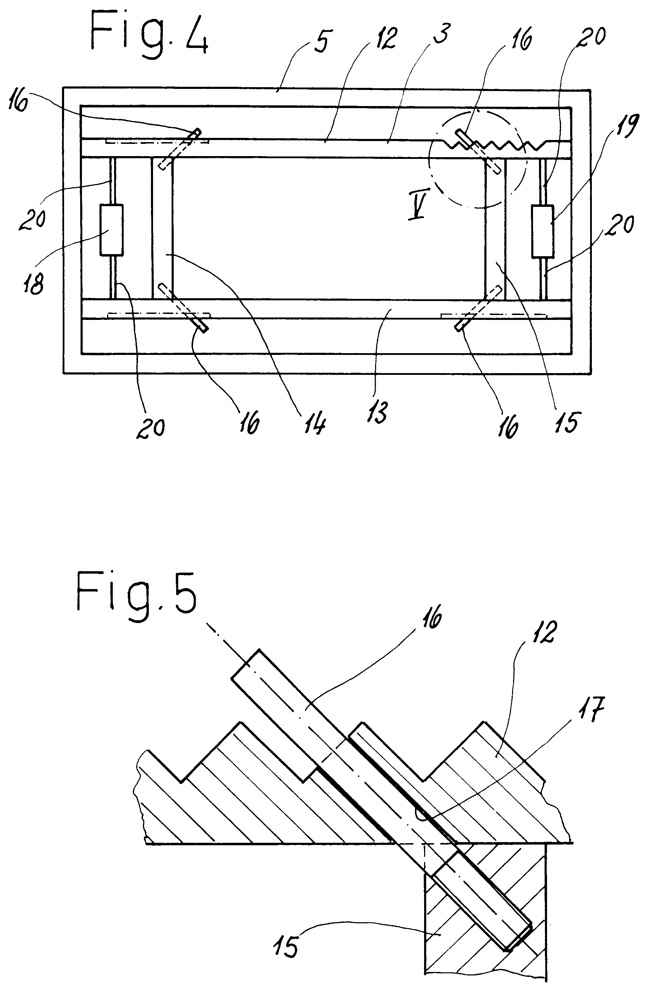

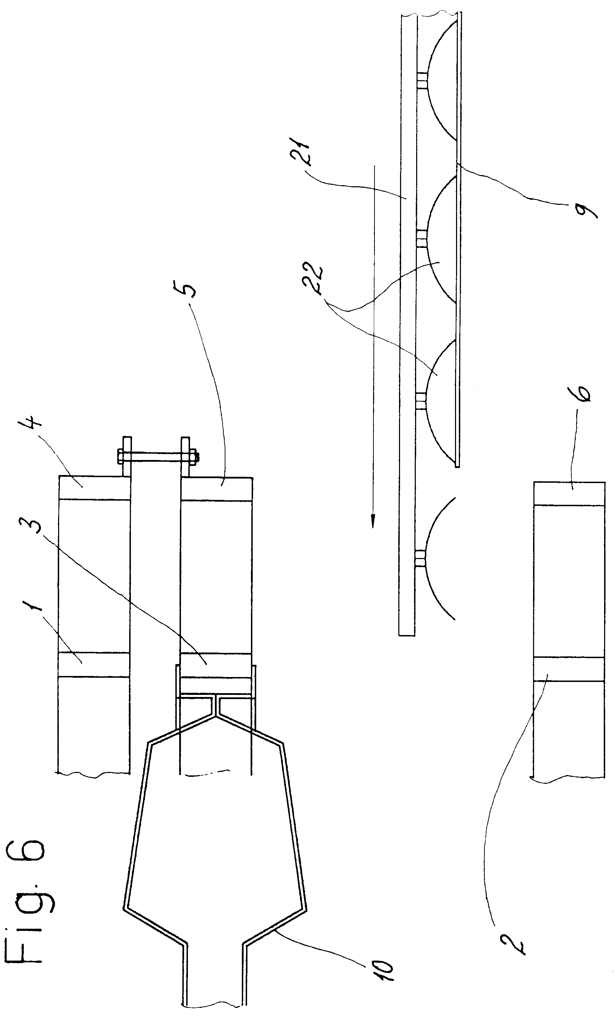

Um ein Auswerfen des Fertigteils 10 aus dem Distanzrahmen 3 zu ermöglichen, weist dieser eine bestimmte, in Fig. 4 und 5 gezeigte Ausbildung auf. Die beiden Längsrahmenleisten oder -teile 12 und 13 des Distanzrahmens 3 sind gleitend verschiebbar im Trägerrahmen 5 gehalten und befestigt. Die beiden Querrahmenleisten oder -teile 14 und 15 weisen jeweils im Bereich ihrer Enden schräg, etwa im Winkel von 45^{o}, verlaufende Führungsbolzen 16 auf, die in der Ebene des Distanzrahmens 3 liegend in entsprechende Bohrungen 17 der Längsrahmenteile 12 und 13 gleitend eingreifen. Die Führungsbolzen 16 sind hierbei, wie auch deutlich in Fig. 5 zu erkennen ist, nach innen, d.h. zum Distanzrahmen 3 hin, geneigt. Des weiteren ist auf beiden Seiten des Distanzrahmens 3 jeweils seitlich der Querrahmenteile 14 und 15 ein Bewegungsmechanismus 18 und 19 angeordnet, der über Schubstangen 20 od. dgl. an den Längsrahmenteilen 12 und 13 angreift. Der Bewegungsmechanismus kann z.B. als Arbeitszylinder oder als Elektromotor usw. ausgebildet sein. Werden nun über die Bewegungsmechanismen 18 und 19 die beiden verschiebbaren Längsrahmenteile 12 und 13 auseinandergedrückt, so werden gleichzeitig durch die als Schrägführung wirkenden Führungsbolzen 16 die beiden Querrahmenteile 14 und 15 voneinander weg bewegt, d.h. auch deren gegenseitiger Abstand vergrößert. Hierdurch wird der lichte Querschnitt des Distanzrahmens 3 soweit vergrößert, bis das Fertigteil 10 in dieser Entformungsposition abgeworfen wird und herausfällt. Selbstverständlich ist es auch möglich, die Führungsbolzen 16 an den Längsrahmenteilen 12 und 13 zu befestigen und gleitend in die Querrahmenteile 14 und 15 eingreifen zu lassen, die im Trägerrahmen 5 gleitend geführt und gehalten sind. Die Bewegungsmechanismen 18 und 19 sind in diesem Fall jeweils neben den Längsrahmenteilen 12 und 13 angeordnet und wirken mit ihren Schubstangen 20 od. dgl. auf die Querrahmenteile 14, 15 ein. Durch die schrägen Führungsbolzen 16 werden also die Querrahmenteile 14, 15 (bzw. die Längsrahmenteile 12, 13) gehalten, damit sie nicht herabfallen, und gleichzeitig beim Wirksamwerden der Bewegungsmechanismen vom Form- bzw. Fertigteil wegbewegt, bis dieses aus dem vollständig geöffneten Distanzrahmen 3 fällt.

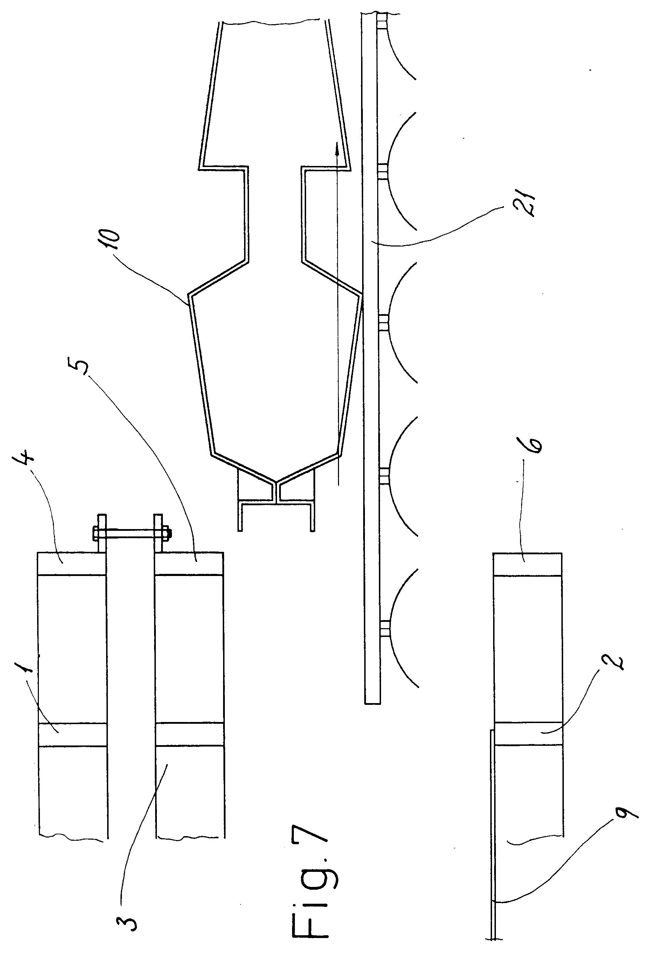

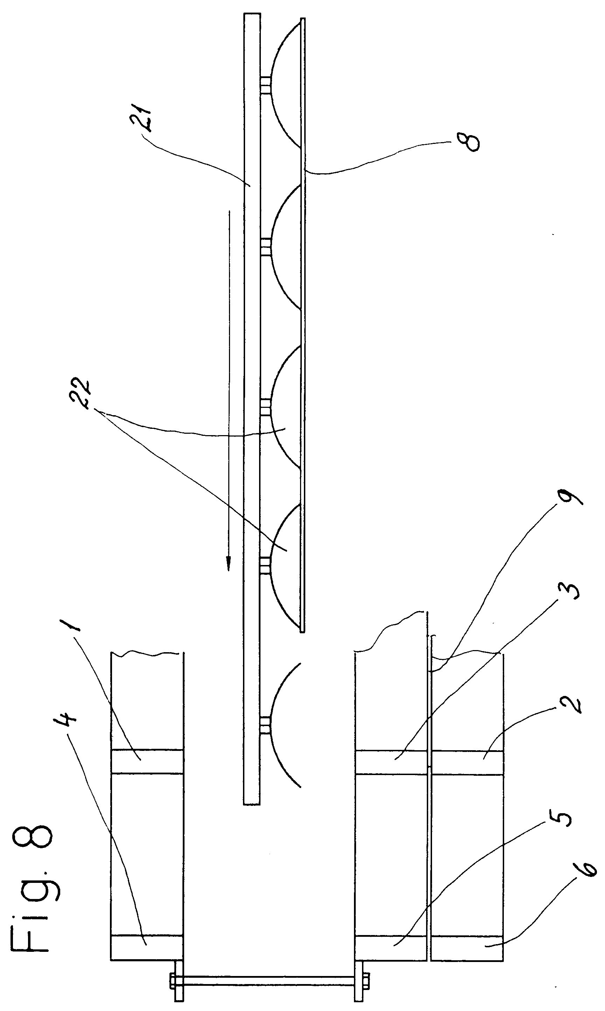

Die Wirkungs- und Arbeitsweise der automatisch arbeitenden Vakuumformmaschine wird nun im folgenden anhand der Fig. 6 bis 8 beschrieben. Neben dem bereits näher erläuterten Spann- und Abwurfmechanismus ist noch eine Beschickungsvorrichtung 21 vorgesehen, die als seitlich in einer Ebene ein- und ausfahrbarer Wagen ausgebildet ist. Der Wagen 21 trägt an seiner Unterseite mehrere Saugnäpfe 22 zum Halten der einzubringenden Kunststoffplatten 8 und 9. Bei geöffnetem oberen Spannrahmen 1 und angehobenem Distanzrahmen 3 gemäß Fig. 6 (entsprechend Fig. 3), also nach dem Anheben des oberen Spannrahmens 1 auf "Entnahme", wird die erste neue Kunststoffplatte 9, die an den Saugnäpfen 22 des Wagens 21 gehalten ist, eingefahren. Sobald der Wagen 21 vollständig eingefahren ist, wird die Platte 9 durch einen Preßluftstoß auf den unteren Spannrahmen 2 abgeworfen. Gleichzeitig fahren die Rahmenteile des Distanzrahmens 3, wie weiter oben beschrieben, auseinander und geben das Formteil 10 frei, das auf die Oberseite des Wagens 21 abgeworfen wird. Der Wagen 21 fährt nun mit dem Formteil 10 aus der Vakuumformmaschine heraus, wie in Fig. 7 zu erkennen ist. Nun wird die zweite neue Platte 8 vom Wagen 21 aufgenommen, der obere Spannrahmen 1 wird, nachdem die Rahmenteile des Distanzrahmens 3 wieder zusammengefahren sind, abgesenkt bis zur Auflage des Distanzrahmens 3 auf dem unteren Spannrahmen 2, wobei der obere Spannrahmen 1 aufgrund der losen Verbindung zwischen ihm und dem Distanzrahmen 3 noch einen entsprechenden vertikalen Abstand zum Distanzrahmen 3 beibehält. Der Wagen 21 fährt mit der Platte 8 ein und wirft diese auf den Distanzrahmen 3 ab. Nach dem Ausfahren des leeren Wagens 21 schließt der obere Spannrahmen 1 vollständig (vgl. auch Fig. 1) und der nächste Verformungszyklus wird eingeleitet. Auf diese Weise ist also ein vollständig automatisiertes "Twinsheetverformen" erreicht. Die so ausgebildete Vakuumformmaschine erlaubt somit ein automatisiertes Beladen von zwei Kunststoffplatten hintereinander und das automatisierte Entnehmen des Fertigteils mit Hilfe des in zwei verschiedenen Positionen einstellbaren Spannrahmensystems und des Distanzrahmens mit in ihrem Abstand verstellbaren Rahmenteilen sowie der losen Verbindung zwischen Distanzrahmen und dem oberen Spannrahmen, die ein Anheben des Distanzrahmens mit Hilfe des oberen Spannrahmens in einer einstellbaren Distanz voneinander gestattet.

## Patentansprüche

1. Vakuumformmaschine zum gleichzeitigen Verformen und Verschweißen zweier Kunststoffplatten bzw. -folien (8, 9) mit einem zwischen dem oberen und unteren Spannrahmen (1, 2) angeordneten, die beiden Kunststoffplatten (8, 9) während des Beheizens und Plastifizierens im Abstand zueinander haltenden Distanzrahmen (3), dadurch gekennzeichnet, daß die beiden Spannrahmen (1, 2) und der Distanzrahmen (3) jeweils in einem Trägerrahmen (4, 5, 6) gehalten sind, wobei der Trägerrahmen (4) des oberen Spannrahmens (1) mit dem Trägerrahmen (5) des Distanzrahmens (3) derart verbunden ist, daß er den Distanzrahmen (3) nach dem Abheben des oberen Spannrahmens (1) vom Distanzrahmen (3) nach einem bestimmten Hub mitnimmt, und daß sämtliche Rahmenteile (12, 13, 14, 15) des Distanzrahmens (3) zur Veränderung ihres Abstandes voneinander unter entsprechender Veränderung des lichten Querschnitts des Distanzrahmens (3) innerhalb des zugehörigen Trägerrahmens (5) verlager- bzw. verschiebbar angeordnet sind.

2. Vakuumformmaschine nach Anspruch 1, dadurch gekennzeichnet, daß an den Querrahmenteilen (14, 15) bzw. Längsrahmenteilen (12, 13) des Distanzrahmens (3) im Bereich dessen Ecken schräg verlaufende Führungsbolzen (16) befestigt sind, die gleitend in die jeweils benachbarten Rahmenteile (Längsrahmenteile 12, 13; Querrahmenteile 14, 15) eingreifen, wobei die Längsrahmenteile (12, 13) bzw. Querrahmenteile (14, 15) verschiebbar innerhalb des Trägerrahmens (5) geführt sind, und daß zwischen den Längsrahmenteilen (12, 13) bzw. Querrahmenteilen (14, 15) auf beiden Seiten des Distanzrahmens (3) jeweils ein die Längsrahmenteile (12, 13) oder die Querrahmenteile (14, 15) bis zur vollständigen Freigabe des Formteils (10) verschiebender Bewegungsmechanismus (18, 19) angeordnet ist.

3. Vakuumformmaschine nach Anspruch 2, dadurch gekennzeichnet, daß die Führungsbolzen (16) in einem Winkel von etwa 45^{o} gegenüber den Rahmenteilen (12, 13, 14, 15) in deren Ebene geneigt verlaufen.

4. Vakuumformmaschine nach einem der Ansprüche 1 bis 3, dadurch gekennzeichnet, daß der Trägerrahmen (5) des Distanzrahmens (3) und der Trägerrahmen (4) des Spannrahmens (1) lose miteinander verbunden sind, derart, daß am Trägerrahmen (4) des oberen Spannrahmens (1) Zapfen, Bolzen (7) od. dgl. befestigt sind, die gleitend in Bohrungen des Trägerrahmens (5) des Distanzrahmens (3) eingreifen und an ihren freien Enden Anschläge (11) tragen, die nach einem bestimmten Hub des Spannrahmens (1) zur Anlage am Trägerrahmen (5) des Distanzrahmens (3) unter Mitnahme desselben kommen.

5. Vakuumformmaschine nach Anspruch 4, dadurch gekennzeichnet, daß die Anschläge (11) zur Einstellung des gewünschten freien Hubs bzw. des Abstandes des oberen Spannrahmens (1) zum Distanzrahmen (3) verstellbar sind.

6. Vakuumformmaschine nach Anspruch 4 oder 5, dadurch gekennzeichnet, daß die Anschläge (11) als auf die Bolzen (7) aufgeschraubte Gewindemuttern ausgebildet sind.

7. Vakuumformmaschine nach einem der Ansprüche 1 bis 6, gekennzeichnet durch eine als seitlich in einer Ebene ein- und ausfahrbarer Wagen ausgebildete Beschickungsvorrichtung (21) zum Einbringen der Kunststoffplatten (8, 9) und zum Ausbringen der Formteile (10), an deren Unterseite Saugnäpfe (22) zum Festhalten der Kunststoffplatten (8, 9) während des Einbringens angeordnet sind, wobei der pro Verformungszyklus zweimal einfahrende Wagen (21) beim ersten Mal die eine Kunststoffplatte (9) trägt, zwischen den unteren Spannrahmen (2) und den angehobenen Distanzrahmen (3) einfährt und die Kunststoffplatte (9) auf den unteren Spannrahmen (2) abwirft, beim Ausfahren das nach dem Öffnen des Distanzrahmens (3) auf seine Oberseite abgeworfene Formteil (10) ausbringt und beim zweiten Mal mit der zweiten Kunststoffplatte (8) zwischen den abgesenkten und geschlossenen Distanzrahmen (3) und den oberen Spannrahmen (1) einfährt und die Kunststoffplatte (8) auf den Distanzrahmen (3) abwirft.

## Claims

1. A vacuum-forming machine for the simultaneous forming and welding of two plastics sheets or films (8, 9) with a spacing frame (3) which is disposed between upper and lower clamping frames (1, 2) and which maintain the two plastics sheets (8, 9) at a distance apart from one another during the heating and plasticizing, characterised in that the two clamping frames (1, 2) and the spacing frame (3) are retained in a respective support frame (4, 5, 6), wherein the support frame (4) of the upper clamping frame (1) is connected with the support frame (5) of the spacing frame (3) in such a way that, after the removal of the upper clamping frame (1) from the spacing frame (3) it entrains the spacing frame (3) after a given travel, and in that, with a view to varying their distance apart while suitably varying the unobstructed cross-section of the spacing frame (3), all the frame parts (12, 13, 14, 15) of the spacing frame (3) are displaceably or slidably arranged inside the associated support frame (5).

2. A vacuum-forming machine according to Claim 1, characterised in that obliquely extending guide pins (16) are mounted on the transverse frame parts (14, 15) and/or longitudinal frame parts (12, 13) of the spacing frame (3) in the vicinity of its corners, which pins slide into engagement in the respective adjacent frame parts (longitudinal frame parts 12, 13; transverse frame parts 14, 15), wherein the longitudinal frame parts (12, 13) and/or the transverse frame parts (14, 15) are guided displaceably inside the support frame (5), and in that between the longitudinal frame parts (12, 13) and the transverse frame parts (14, 15) on both sides of the spacing frame (3) there is disposed a respective operating mechanism (18, 19) displacing the longitudinal frame parts (12, 13) or the transverse frame parts (14, 15) until the moulded article (10) is completely released.

3. A vacuum-forming machine according to Claim 2, characterised in that the guide bolts (16) extend inclined in their plane at an angle of approximately 45° with respect to the frame parts (12, 13, 14, 15).

4. A vacuum-forming machine according to any one of Claims 1 to 3, characterised in that the support frame (5) of the spacing frame (3) and the support frame (4) of the clamping frame (1) are loosely connected with one another in such a way that pegs, pins (7) or the like are secured to the support frame (4) of the upper clamping frame (1), which slide into engagement in bores of the support frame (5) of the spacing frame (3) and which at their free ends have stop members (11) which after a certain travel of the clamping frame (1) abut against the support frame (5) of the spacing frame (3) and entrain it.

5. A vacuum-forming machine according to Claim 4, characterised in that the stop members (11) are adjustable for setting the desired free travel and/or distance of the upper clamping frame (1) from the spacing frame (3).

6. A vacuum-forming machine according to Claim 4 or 5, characterised in that the stop members (11) are in the form of threaded nuts screwed on to the pins (7).

7. A vacuum-forming machine according to any one of Claims 1 to 6, characterised by a feed device (21), in the form of a carriage which can be moved in and out laterally in one plane, for loading the plastics sheets (8, 9) and for unloading the moulded articles (10), on the underside of which there are provided suction cups (22) for retaining the plastics sheets (8, 9) during the loading operation, wherein the carriage (21), which moves in twice per forming cycle, the first time carrying one plastics sheet (9) moves in between the lower clamping frame (2) and the raised spacing frame (3) and releases the plastics sheet (9) on to the lower clamping frame (2), upon moving out unloads the moulded article (10) released on its upper side after the opening of the spacing frame (3) and, the second time, moves in with the second plastics sheet (8) between the lowered and closed spacing frame (3) and the upper clamping frame (1) and releases the plastics sheet (8) on to the spacing frame (3).

## Revendications

1. Machine de formage sous vide destinée à simultanément déformer et souder deux plaques ou films en matière plastique (8, 9), avec un cadre d'écartement (3), disposé entre les cadres de tension supérieur et inférieur (1, 2), maintenant les deux plaques en matière plastique (8, 9) distantes l'une de l'autre pendant le chauffage et la plastification, caractérisée par le fait que les deux cadres de tension (1, 2) et le cadre d'écartement (3) sont supportés chacun, dans un cadre porteur (4, 5, 6), le cadre porteur (4) du cadre de tension supérieur (1) étant relié au cadre porteur (5) du cadre d'écartement (3) de telle manière qu'il entraîne le cadre d'écartement (3), après le soulèvement du cadre de tension supérieur (1) du cadre d'écartement (3), après une course déterminée, et que tous les éléments de cadre (12, 13, 14, 15) du cadre d'écartement (3) sont disposés de manière déplacable ou coulissable dans le cadre porteur (5) correspondant en vue de la modification de leur distance l'un par rapport à l'autre avec une modification correspondante de la section nominale du cadre d'écartement (3).

2. Machine de formage sous vide suivant la revendication 1, caractérisée par le fait qu'aux éléments de cadre transversaux (14, 15) ou aux éléments de cadre longitudinaux (12, 13) du cadre d'écartement (3) sont fixés, à l'endroit de leurs coins, des boulons de guidage (16) s'étendant obliquement qui s'engagent, par glissement, dans les éléments de cadre adjacents correspondants (éléments de cadre longitudinaux 12, 13; éléments de cadre transversaux 14, 15), les éléments de cadre longitudinaux (12, 13) ou les éléments de cadre transversaux (14, 15) étant guidés de manière déplaçable dans le cadre porteur (5), et qu'entre les éléments de cadre longitudinaux (12, 13) ou les éléments de cadre transversaux (14, 15) des deux côtés du cadre d'écartement (3) est chaque fois disposé un mécanisme de déplacement (18, 19) déplacant les éléments de cadre longitudinaux (12, 13) ou les éléments de cadre transversaux (14, 15) jusqu'au dégagement complet de la pièce formée (10).

3. Machine de formage sous vide suivant la revendication 2, caractérisée par le fait que les boulons de guidage (16) s'étendent inclinés suivant un angle d'environ 45° par rapport aux éléments de cadre (12, 13, 14, 15), dans le plan de ceux-ci.

4. Machine de formage sous vide suivant l'une des revendications 1 à 3, caractérisée par le fait que le cadre porteur (5) du cadre d'écartement (3) et le cadre porteur (4) du cadre de tension (1) sont reliés de manière libre l'un à l'autre, de telle manière qu'au cadre porteur (4) du cadre de tension supérieur (1) sont fixés des goupilles, boulons (7) ou autres qui s'engagent, par glissement, dans des alésages du cadre porteur (5) du cadre d'écartement (3) et qui portent, à leurs extrémités libres, des butées (11) qui, après une course déterminée du cadre de tension (1), viennent s'appuyer sur le cadre porteur (5) du cadre d'écartement (3), tout en entraînant celui-ci.

5. Machine de formage sous vide suivant la revendication 4, caractérisée par le fait que les butées (11) sont déplaçables en vue du réglage de la course libre désirée ou de l'écartement désiré entre le cadre de tension supérieur (1) et le cadre d'écartement (3).

6. Machine de formage sous vide suivant la revendication 4 ou 5, caractérisée par le fait que les butées (11) se présentent sous forme d'écrous filetés vissés sur les boulons (7).

7. Machine de formage sous vide suivant l'une des revendications 1 à 6, caractérisée par un dispositif d'alimentation (21) se présentant sous forme de chariot pouvant être amené latéralement sur et hors d'un plan et destiné et l'amenée des plaques en matière plastique (8, 9) et à l'évacuation des pièces formées (10), sur la face inférieure duquel sont disposées des ventouses (22) destinées à retenir les plaques en matière plastique (8, 9) pendant l'amenée, le chariot (21) entrant deux fois par cycle de déformation portant, la première fois, l'une des plaques en matière plastique (9), pénétrant entre le cadre de tension inférieur (2) et le cadre d'écartement (3) soulevé et déposant la plaque en matière plastique (9) sur le cadre de tension inférieur (2) et sortant, lors de la sortie, la pièce formée (10) déposée sur sa face supérieure après l'ouverture du cadre de tension inférieur (2) et, pénétrant, la seconde fois, avec la seconde plaque en matière plastique (8), entre le cadre d'écartement (3) abaissé et fermé et le cadre de tension supérieur (1) et déposant la plaque en matière plastique (8) sur le cadre d'écartement (3).
